# DEMANDE DE BREVET EUROPEEN

(11) **EP 2 261 524 A1**
(43) Date de publication de la demande: **15.12.2010**
(21) Numéro de dépôt: 10164901.0
(22) Date de dépôt: 04.06.2010
(51) Int. Cl.: F16D 23/04

(54) **Dispositif de couplage par cone de friction pour boîte de vitesses**

(30) Priorité: 11.06.2009 FR 0953859
(71) Demandeur: Peugeot Citroën Automobiles SA, 78140 Vélizy-Villacoublay (FR)
(72) Inventeur: Wascheul, Michael, 78260 Acheres (FR)

(57) **Abrégé**

L'invention concerne un dispositif (1) de couplage par friction d'un pignon fou (12) avec un arbre (10) de boîte de vitesses comportant un moyeu (14) solidaire en rotation de cet arbre (10), un manchon (24) libre de glisser axialement par rapport à l'arbre (10), des anneaux coniques (16₁, 16₂, 16₃, 18₁, 18₂) de diamètres décroissants disposés de manière concentrique entre le moyeu (14) et le pignon fou (20), les anneaux coniques étant alternativement liés en rotation au moyeu (14) et au pignon fou (12) au moyen de tocs d'entraînement, les anneaux coniques (16₁, 16₂, 16₃, 18₁, 18₂) étant aptes à être mis en contact sous l'action d'un effort axial de commande exercé par le manchon (24), de façon à transmettre par friction au pignon fou (12) un couple de rotation reçu du moyeu (14), le dispositif (1) étant **caractérisé en ce que** le manchon (24) exerce l'effort axial de commande sur l'anneau conique de plus petit diamètre, le manchon (24) étant solidaire en rotation du pignon fou ; réalisant avec ce dernier une liaison glissière.

## Description

La présente invention est relative aux dispositifs de couplage par friction dits « multi cônes », notamment ceux permettant la synchronisation et/ou la transmission de couple dans une boîte de vitesses mécanique de véhicule automobile.

De tels dispositifs sont très utilisés, notamment pour la synchronisation des boîtes de vitesses, qui consiste en l'égalisation par frottement de la vitesse d'un arbre de la boîte avec celle d'un pignon fou tournant autour de celui-ci, lors d'un changement de rapport de vitesse.

II est connu, notamment par le document FR 2846 061,un synchroniseur de type multi-cônes, comportant trois anneaux coniques, respectivement un anneau supérieur, intermédiaire et inférieur, ces anneaux étant de diamètre décroissant dans cet ordre de manière à pouvoir être arrangés les uns à l'intérieur des autres, de manière concentrique. Les anneaux supérieur et inférieur sont liés en rotation à un moyeu solidaire de l'arbre tournant, tandis que l'anneau intermédiaire est lié en rotation au pignon fou. Les anneaux intermédiaire et inférieur comportent tous deux une surface de frottement interne et une surface de frottement externe. L'anneau supérieur ne comporte lui qu'une surface de frottement interne. Le pignon fou est pourvu d'un flasque comportant une surface de frottement conique destinée à coopérer avec la surface de frottement interne de l'anneau inférieur.

La mise en service d'un tel dispositif de couplage est réalisée par déplacement axial des anneaux et la mise en contact des surfaces coniques en vis-à-vis, à l'aide d'un manchon en liaison glissière avec le moyeu. On génère ainsi un couple de friction qui est transmis du moyeu au pignon fou via les surfaces de frottement coniques de l'ensemble des anneaux.

De manière connue, la liaison entre, d'une part, les anneaux coniques supérieur et inférieur et le moyeu, et, d'autre part, l'anneau intermédiaire et le pignon fou, est réalisée au moyen de « tocs » d'entraînement, qui sont des ergots présents sur l'ensemble des anneaux coniques, et coopérant avec des cavités du moyeu dans le premier cas et du pignon fou dans le second cas.

Cependant les dispositifs existants tels que celui décrit ci-dessus présentent plusieurs inconvénients :
- lorsqu'une capacité de transmission de couple importante est requise, le dimensionnement des pièces de frottement induit un encombrement important, ce qui rend l'intégration dans une boîte de vitesses difficile;
- le guidage des anneaux coniques est peu satisfaisant et fait apparaître des problèmes d'oscillation de couple lorsque les cônes sont désaxés;

Le but de l'invention est de remédier aux inconvénients précédents.

Ainsi, l'invention concerne un dispositif de couplage par friction d'un pignon fou avec un arbre de boîte de vitesses comportant un moyeu solidaire en rotation de cet arbre, un manchon libre de glisser axialement par rapport à l'arbre, des anneaux coniques, de diamètres décroissants disposés de manière concentrique entre le moyeu et le pignon fou, les anneaux coniques étant alternativement liés en rotation au moyeu et au pignon fou au moyen de tocs d'entraînement, les anneaux coniques, étant aptes à être mis en contact sous l'action d'un effort axial de commande exercé par le manchon, de façon à transmettre par friction au pignon fou un couple de rotation reçu du moyeu, le dispositif étant **caractérisé en ce que** le manchon exerce l'effort axial de commande sur l'anneau conique de plus petit diamètre, le manchon étant solidaire en rotation du pignon fou; réalisant avec ce dernier une liaison glissière.

Dans une réalisation, le manchon est disposé entre le pignon fou et l'ensemble des anneaux coniques.

Dans une réalisation, le manchon comporte des cavités aptes à coopérer avec les tocs d'entraînement des anneaux coniques.

Dans une réalisation, le manchon est pourvu d'une surface de frottement conique, apte à coopérer avec l'anneau conique adjacent.

Dans une réalisation, un anneau conique flottant, solidaire en rotation du moyeu et apte à loger l'ensemble des anneaux coniques, est disposé entre le moyeu et l'ensemble des anneaux coniques.

Dans une réalisation, l'anneau conique flottant est solidaire d'une plaque de fixation fixée au moyeu.

Dans une réalisation, la plaque de fixation comporte des cavités aptes à coopérer avec les tocs d'entraînements des anneaux coniques.

Dans une réalisation, le dispositif comporte au moins cinq anneaux coniques.

L'invention concerne également une boîte de vitesses mécanique, manuelle ou pilotée, comprenant un dispositif tel que défini ci-dessus.

Un exemple de réalisation de l'invention est décrit ci-après de manière non limitative, en relation avec les figures parmi lesquelles :
- la figure 1 est une vue en coupe d'un dispositif selon l'invention monté sur un arbre d'une boîte de vitesses mécanique;
- la figure 2 est une vue éclatée du montage de la figure 1 ;
- les figures 3a et 3b montrent sont des vues en perspective d'un manchon conforme à l'invention ;
- les figures 4a et 4b sont des vues en perspective d'un anneau conique flottant conforme à l'invention ;
- La figure 5 est une vue en perspective d'une plaque d'appui conforme à l'invention.

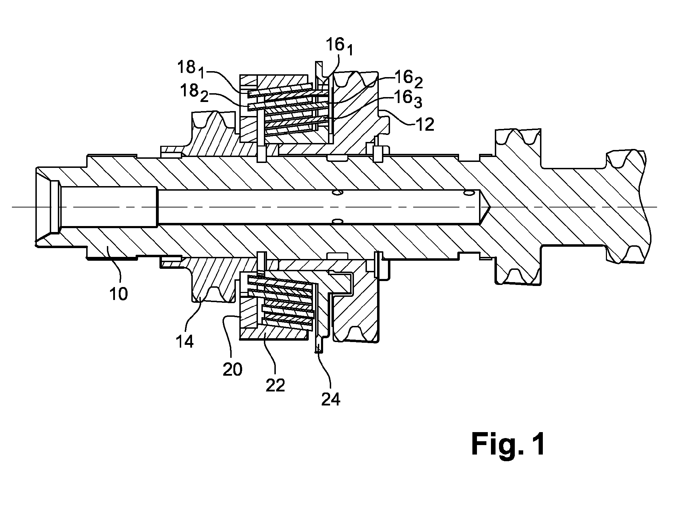

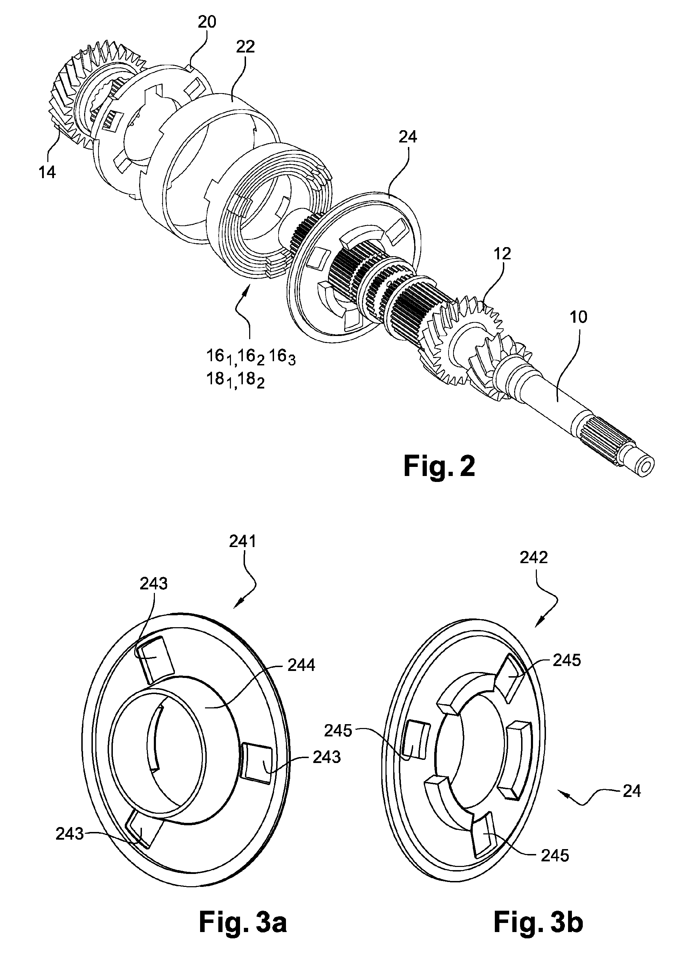

Les figures 1 et 2 montre un dispositif de transmission de couple par friction conforme à l'invention, assemblé sur un arbre 10. Le dispositif comprend un moyeu 14 solidaire en translation et en rotation de l'arbre 10, qui est dans l'exemple un arbre de boîte de vitesses mécanique de véhicule automobile. L'arbre 10 porte également un pignon fou 12, en vis-à-vis du moyeu 14. Entre le moyeu 14 et le pignon fou 12 est disposé un empilement d'anneaux coniques 16₁, 16₂, 16₃, 18₁, 18₂. Ces anneaux coniques présentent chacun deux surfaces de frottement coniques, respectivement externe et interne, et ils sont alternativement liés en rotation au moyeu 14 et au pignon fou 12 au moyen de tocs d'entraînement. Les anneaux coniques sont de diamètre décroissant du moyeu vers le pignon fou, de manière à ce qu'ils puissent être arrangés les uns à l'intérieur des autres, de manière concentrique.

Le dispositif décrit à la figure 1 comporte au total cinq anneaux coniques, dont trois anneaux 16_{1,} 16_{2,} 16₃ liés en rotation au pignon fou 12, un anneau supérieur, un anneau intermédiaire et un anneau inférieur. Le moyeu est lié quant à lui en rotation à deux anneaux intermédiaires 18₁, 18₂.

De manière connue, il est prévu un manchon 24 apte à se déplacer en translation le long de l'arbre 10. II est commandé, de manière également connue par un mécanisme d'entraînement (non représenté) de type fourchette et d'un actionneur, par exemple hydraulique ou électrique.

Selon l'invention, lorsque les anneaux coniques doivent être mis en contact afin de transmettre un couple, le manchon ne vient pas, comme dans l'art antérieur, solliciter l'anneau conique de plus grand diamètre (dans l'exemple l'anneau supérieur 16₁), mais vient exercer un effort axial de commande sur l'anneau conique de plus petit diamètre, soit l'anneau conique inférieur 16₃, ou encore anneau conique interne. Ainsi, le manchon réalise un guidage interne des anneaux coniques. II est à cette fin en liaison glissière avec le pignon fou 12 et donc solidaire en rotation de ce dernier. Le guidage interne selon l'invention permet d'obtenir un meilleur guidage des anneaux coniques entre eux. On résout ainsi les problèmes dus au guidage « externe » de l'art antérieur (c'est-à-dire par déplacement de l'anneau conique de plus grand diamètre). En effet, dans l'art antérieur, il se produit des désaxages entre les anneaux coniques, générant des défauts de fonctionnement tels que oscillations de couple, vibrations importantes, usure prématurées du mécanisme, etc. Grâce au guidage interne selon l'invention, les causes de ces différents défauts sont entièrement supprimées, notamment en évitant toute possibilité de désaxage et de désalignement des anneaux. En effet, dans un dispositif conforme à l'invention, les anneaux coniques s'autocentrent entre eux du fait du guidage interne.

L'invention présente d'autres avantages importants en comparaison avec l'art antérieur, parmi lesquels une plus grande compacité. En effet, dans l'art antérieur, les anneaux coniques liés en rotation au moyeu, ci-après « rotors », sont entraînés en rotation par une pièce généralement appelé « couronne à tocs », qui est fixe en translation. Or, lorsque le manchon exerce son effort axial de commande afin de mettre les anneaux coniques en contact les uns avec les autres, cet effort axial tend à éloigner les rotors de la couronne à tocs (fixe en translation), entraînant un risque que les tocs d'entraînement des rotors s'échappent de leurs logements situés sur la couronne à tocs. II est donc nécessaire que les tocs des rotors soient dimensionnés avec une marge suffisant, tenant compte de l'usure du mécanisme, afin d'éliminer totalement ce risque. Les dimensions importantes des tocs empêchent ainsi une compacité optimale du mécanisme.

Dans l'invention, le problème exposé ci-dessous est inexistant, car l'effort axial du manchon est dirigé dans le sens inverse, éliminant ainsi tout risque de voir les tocs des anneaux coniques sortir de leur logement. D'autre part, le manchon 24 ayant dans l'invention, en plus de son rôle de commande, un rôle d'entraînement en rotation des anneaux coniques (ceux non liés en rotation au moyeu), la pièce dite « couronne à tocs » présente dans l'art antérieur, devient inutile dans un dispositif selon l'invention. On gagne donc encore en compacité, en coût et en masse par rapport aux dispositifs connus.

Avantageusement, le manchon 24 est intercalé entre le pignon fou et l'ensemble des anneaux coniques. Dans ce cas, comme visible sur la figure 1, la mise en contact de surfaces coniques des anneaux coniques se fera donc par déplacement du manchon 24 du pignon fou 12 vers le moyeu 14.

Avantageusement, un anneau conique flottant 22 est intercalé entre le moyeu 14 et l'ensemble des anneaux coniques. Celui-ci est en liaison glissière avec le moyeu 14. Cette liaison glissière est réalisée par coopération entre l'anneau conique flottant 22 et une pièce intermédiaire 20, ou plaque de fixation qui est solidaire du moyeu 14.

Le fonctionnement du dispositif selon l'invention est le suivant : lorsque la transmission d'un mouvement est requise, le manchon 24 est déplacé vers l'empilement des anneaux coniques 16₁, 16₂, 16₃, 18₁, 18₂, et exerce sur celui-ci un effort axial, via l'anneau conique de plus petit diamètre, afin de mettre en contact les surfaces des anneaux coniques en vis-à-vis, générant ainsi un couple de friction.

Les anneaux coniques, comme expliqué plus haut, sont tous pourvus de tocs d'entraînement afin d'être liés en rotation au moyeu 14, par l'intermédiaire de la plaque de fixation 20, ou au pignon fou 12, par l'intermédiaire du manchon 24, selon le type d'anneau..

Les figures 3a et 3b montrent une vue d'un manchon 24 selon l'invention. Celui-ci est pourvu d'une face avant 241 et d'une face arrière 242. II comporte une pluralité de cavités 243, au nombre de trois dans l'exemple des figures 3a et 3b, circonférentiellement espacées. Ces cavités sont destinées à coopérer avec les tocs d'entraînement des anneaux coniques 16₁, 16₂, 16₃ afin que ces derniers puissent entraîner le manchon en rotation et, par conséquent, le pignon fou. D'autre part, le manchon 24 comporte sur sa face avant 241 une surface conique annulaire 244. Cette surface est destinée à coopérer avec la surface de frottement interne de l'anneau conique de plus petit diamètre 16₃ lorsque le manchon 24 exerce un effort axial pour mettre les anneaux coniques en contact. Enfin, le manchon 24 comprend une pluralité d'ergots de liaison, ou tocs 245, (trois dans l'exemple), destinés à coopérer avec des cavités complémentaires formées dans le pignon fou 12, permettant de rendre solidaires en rotation le manchon 24 et le pignon fou 12.

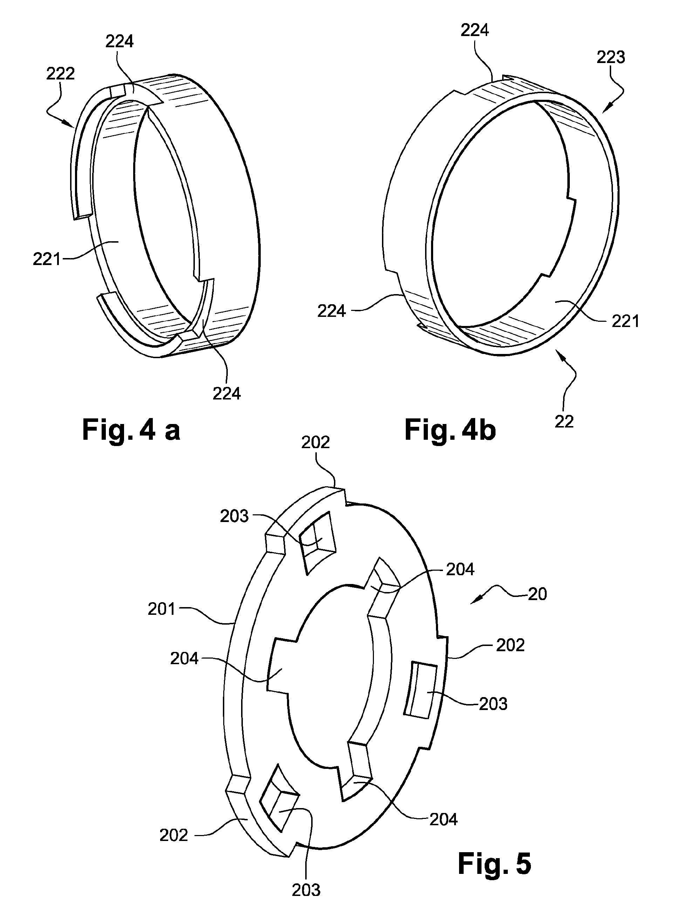

Les figures 4a et 4b montrent un anneau conique flottant 22 selon l'invention. Celui-ci prend la forme d'une bague conique avec une face avant 222 et une face arrière 223, comportant une surface de frottement conique interne 221. Le diamètre de cet anneau conique flottant 22 est supérieur au diamètre extérieur de l'anneau conique de plus grand diamètre 16₁. Ainsi l'anneau conique flottant 22 est apte à contenir l'empilement d'anneaux coniques, et également à former une surface de frottement qui coopère, lors de la transmission d'un couple, avec la surface de frottement externe de l'anneau conique de plus grand diamètre 16₁. Afin d'être entraîné en rotation par la plaque de fixation 20, l'anneau conique flottant 22 comporte sur sa face avant 222 une pluralité de cavités 224 destinées à coopérer avec des tocs d'entraînements équipant la plaque de fixation 20

La figure 5 montre une plaque de fixation 20 conforme à l'invention, destinée à être fixée sur le moyeu 14, de manière à être solidaire de celui-ci en translation et en rotation. La plaque de fixation 20 comporte à sa périphérie 201 trois tocs 202 d'entraînement de l'anneau conique flottant 22. Ces tocs 203 sont ainsi destinés à coopérer avec les cavités 224 présentes à la périphérie de l'anneau conique flottant 20.

Le dispositif selon l'invention présente les avantages suivants : la compacité (en particulier l'encombrement axial), le coût et le poids sont diminués grâce à la suppression de la pièce dite couronne à tocs. D'autre part, ainsi qu'exposé plus haut, grâce au manchon conforme à l'invention, le guidage des anneaux coniques est grandement amélioré, car on évite tout désalignement de ceux-ci grâce à un effet d'autocentrage mutuel.

## Revendications

1. Dispositif (1) de couplage par friction d'un pignon fou (12) avec un arbre (10) de boîte de vitesses comportant un moyeu (14) solidaire en rotation de cet arbre (10), un manchon (24) libre de glisser axialement par rapport à l'arbre (10), des anneaux coniques (16₁, 16₂, 16₃, 18₁, 18₂) de diamètres décroissants disposés de manière concentrique entre le moyeu (14) et le pignon fou (20), les anneaux coniques étant alternativement liés en rotation au moyeu (14) et au pignon fou (12) au moyen de tocs d'entraînement , les anneaux coniques (16₁, 16₂, 16₃, 18₁, 18₂) étant aptes à être mis en contact sous l'action d'un effort axial de commande exercé par le manchon (24), de façon à transmettre par friction au pignon fou (12) un couple de rotation reçu du moyeu (14), le dispositif (1) étant **caractérisé en ce que** le manchon (24) exerce l'effort axial de commande sur l'anneau conique de plus petit diamètre, le manchon (24) étant solidaire en rotation du pignon fou ; réalisant avec ce dernier une liaison glissière.

2. Dispositif selon la revendication 1, dans lequel le manchon (24) est disposé entre le pignon fou (12) et l'ensemble des anneaux coniques (16₁, 16₂, 16₃, 18₁, 18₂).

3. Dispositif selon la revendication 1 ou 2, dans lequel le manchon (24) comporte des cavités (243) aptes à coopérer avec les tocs d'entraînement des anneaux coniques (16₁, 16₂, 16₃).

4. Dispositif selon la revendication 2, dans lequel le manchon (24) est pourvu d'une surface de frottement conique (243), apte à coopérer avec l'anneau conique adjacent.

5. Dispositif selon la revendication 1 ou 2, dans lequel un anneau conique flottant (22), solidaire en rotation du moyeu (14) et apte à loger l'ensemble des anneaux coniques (16₁, 16₂, 16₃, 18₁, 18₂) est disposé entre le moyeu (14) et l'ensemble des anneaux coniques (16₁, 16₂, 16₃, 18₁, 18₂).

6. Dispositif selon la revendication précédente, dans lequel l'anneau conique flottant est solidaire d'une plaque de fixation (20) fixée au moyeu (14).

7. Dispositif selon la revendication 7, dans lequel la plaque de fixation (20) comporte des cavités (203) aptes à coopérer avec les tocs d'entraînements des anneaux coniques (18₁, 18₂).

8. Dispositif selon l'une des revendications précédentes, comportant au moins cinq anneaux coniques (16₁, 16₂, 16₃, 18₁, 18₂).

9. Boîte de vitesses mécanique, manuelle ou pilotée, comprenant un dispositif selon l'une des revendications 1 à 8.
